# EUROPEAN PATENT SPECIFICATION

(11) **EP 2 692 224 B1**
(45) Date of publication and mention of the grant of the patent: **19.04.2017**
(21) Application number: 13178728.5
(22) Date of filing: 31.07.2013
(51) Int. Cl.: A01F 25/20, B23D 61/02, B27B 25/02

(54) **Apparatus for separating feed for livestock**
Vorrichtung zum Trennen von Futter für Nutztiere
Appareil pour séparer de l'aliment pour bétail

(30) Priority: 01.08.2012 NL 2009262
(43) Date of publication of application: 05.02.2014
(73) Proprietor: Liet, Cornelis Hendricus, 7581 TJ Losser (NL)
(72) Inventor: Liet, Cornelis Hendricus, 7581 TJ Losser (NL)
(74) Representative: Zonneveld, Hendrik Jan

(56) References cited:
- EP-A2- 1 712 123
- WO-A1-89/07388
- WO-A2-91/02451
- DE-A1- 3 318 338
- FR-A- 479 402
- FR-A1- 2 570 317
- FR-A1- 2 594 376

## Description

The invention relates to an apparatus for separating feed for livestock, such as feed from bales or blocks of silage, feed from a silo or other feed to be separated.

WO 89/07388 discloses a process and a device for cutting compacted fodder. The device comprises a cutting unit with a draw-off device.

The feed administered to livestock generally is made up of several components. In order to be able to prepare the correct mixture, different types of feed have to be separated and then mixed in the desired mixing ratio, optionally with concentrates. In order to obtain the correct composition of the mixture without squandering feed, the separating means have to precisely separate the correct amount of feed.

The object of the present invention is to provide an apparatus for separating feed, such as for instance feed from free-standing bales or blocks of silage or feed from a silo or similar storage, wherein the risk of the saw getting stuck is substantially lower, wherein the separated feed can be precisely dosed and wherein as little feed as possible is squandered. The apparatus should preferably be energy-efficient.

The object of the invention is achieved with an apparatus comprising:
- a circular saw blade with a sawing edge, where the circular saw blade can be rotatably driven with the aid of driving means;
- a guide for moving a cutting point of the circular saw blade the full length of a cutting face of the feed;
- a rotatable discharge element for carrying away separated feed in the range of a section of the sawing edge which in direction of rotation is behind the cutting point, wherein the rotatable discharge element comprises a scraping roller, which lies at an angle to a drive shaft of the circular saw, and wherein the scraping roller comprises a longitudinal axis which in side view lies at an angle of -10 to +10 degrees to the vertical.

With these measures it is achieved that feed can be separated in amounts which can be precisely determined, in which process the feed is carried away from the saw blade by the discharge element immediately on being separated, so that the risk of the saw getting stuck, the feed caking together on the sawing edge and the squandering of feed is reduced substantially.

The guide can for instance be made up of a frame with a first, essentially horizontal guide, along which the saw blade can be moved in horizontal direction, and a second guide along which the saw blade can be moved up and down. In this way the saw blade can be moved the full length of the entire cutting face in zigzag fashion.

The discharge element can for instance be disposed on the side of the saw blade facing away from the feed to be separated. The discharge element in that case can cover the sawing edge, for instance over an angular distance ω in the range of 0 < ω < 45 degrees, for instance in the range of 0 < ω < 40 degrees, seen in front view of the saw blade.

The rotatable discharge element and the saw can be driven individually or using the same drive unit. The saw and/or the discharge element can for instance be driven with variable speed. The discharge element can be rotated more quickly, more slowly or at the same speed as the saw blade. By having the feeding-out roller rotate more slowly than the saw when separating short-cut straw, the amount of dust released can be restricted.

The discharge element can be arranged such that the separated feed is cast in a direction away from the saw and the cutting face, for instance in the direction of discharge means such as a conveyor belt. To that end the discharge element can for instance comprise a feeding-out roller or scraping roller. Good results are obtained when the feeding-out roller or scraping roller comprises a longitudinal axis which runs essentially parallel to the plane of the circular saw blade. In that case the feeding-out roller or scraping roller can for instance lie at an angle of at most 10 degrees to the vertical, for instance an angle of 0 - 8 degrees, in a plane parallel to the circular saw blade.

In order to ensure that the circular saw can be moved to the bottom tip of the cutting face, the feeding-out roller preferably does not extend to the bottom tip of the circular saw.

The circular saw can for instance be made up of a circular knife with a cutting edge or cutting teeth.

The feeding-out roller can be provided at one end with an end plate, for instance a circular end plate, which for instance is concentric with the longitudinal axis. If the scraping roller is disposed such that the longitudinal axis is at right angles to the surface, the end plate will wipe the floor clean when the cutting unit is in the bottom position. In another embodiment the longitudinal axis of the feeding-out roller can for instance be at right angles to the circular saw blade.

The feeding-out roller can for instance be disposed such that in side view one end of the end plate of the feeding-out roller crosses an end of the saw or the extended saw, or that the extended end plate crosses an end of the saw in side view. Thus, in side view, the end of the end plate can protrude along the end of the saw or the end of the saw can protrude along the end of the end plate, so that in side view the end plate and the saw are arranged in T-shape. Alternatively, it is possible for the end plate and the saw to be disposed such that they each protrude one in relation to the other and so in side view are arranged in X-shape. In the case of a T-shape arrangement, the end plate and the saw can overlap in whole or in part in the horizontal direction of the cutting face. Especially in the case of the said X-shape arrangement, the end plate and the saw can act at different action points or positions on the cutting face, which are spaced out in horizontal direction.

The periphery of the end plate of the feeding-out roller can for instance be provided with cutting elements such as a cutting edge or a number of spaced out knives, such as serrated knives or cutting teeth.

The scraping roller can for instance be disposed such that the longitudinal axis of the scraping roller is at a distance of 0.2 - 1.2 times the diameter of the saw blade, seen in front view or in rear view of the saw blade. The scraping roller can for instance have a length which corresponds to 0.3 - 1.2 times the radius of the circular saw blade.

The scraping roller can for instance comprise a central shaft provided with one or more blades, which extend for instance the full length of the scraping roller. The blades can extend in radial direction and/or be at least partially spiral-shaped. Good results are obtained in the case of a scraping roller which tapers in side view.

In order to reduce the risk of separated feed getting stuck on the saw teeth, the circular saw can be provided with comparatively short cutting teeth.

In a more specific embodiment of the circular saw, the angle η between the extension L of the cutting edge of the saw tooth and the radial line between the centre M of the saw blade and the furthest vertex N of the saw tooth can be a sharp angle, for instance an angle of 0 < η < 25 degrees.

The tip of the cutting tooth cuts and pulls on the crop to be separated. By keeping the cutting teeth short the overall pulling power is restricted, so that the circular saw no longer gets stuck quickly. Preferably, the length of the cutting teeth is such that in the case of optimum speed of the saw for a particular type of feed, the net pulling power of the joint acting teeth is such that the feed to be processed is pulled towards the saw without the saw becoming stuck in the feed. The optimum speed varies per type of feed. For instance, in the case of dry hay or straw a slower speed will be required, while in the case of for instance corn a higher speed can be used. Because the saw is pulling the feed towards it, the saw has to exert less starting push on a block or bale or other type of feed. Particularly good results are obtained when the cutting teeth protrude in relation to the circular periphery of the saw blade, which is continuously circular at any rate in the vicinity of the cutting teeth or in its entirety, that is to say, lacking a serrated pattern between the teeth such as is conventional with common circular saw blades.

If a standard circular saw blade with deeper teeth is used, the bottom part of the teeth can be covered by means of a ring in sheet form. The ends of the teeth in that case protrude in relation to the ring, for instance over 8 mm or less, such as for instance 3 - 4 mm. The outer circumference of the ring thus effectively constitutes the internal diameter of the saw teeth. In order to keep the required cutting pressure low, such a ring is preferably chamfered on its outer circumference. The ring can also be flattened on its inner circumference.

Good results are obtained for instance using teeth of 3 - 4 mm in length.

The risk of uncontrolled breaking off of feed from the cutting face can be reduced by arranging the guide for the saw blade such that the saw blade is moved the full length of a rearwardly incined cutting face. The cutting face in that case can lie at an angle of for instance 0 - 20 degrees, for instance 2 - 15 degrees, to the vertical.

In order to reduce friction with the saw blade, the saw blade in side view (i.e. in a vertical plane through the axis of rotation) can be disposed at a sharp angle to the cutting face. This can for instance be an angle of 0 - 8 degrees, or 3 - 6 degrees, for instance 5 degrees. As a rule, this angle will be smaller than the angle of the rearwardly inclined cutting face to the vertical. Because of this the saw blade in side view also lies at an angle to the vertical, for instance an angle of 0 - 12 degrees.

For further restriction of the contact between the saw blade and the cutting face, the saw blade in top view can also be disposed at an angle to the cutting face. This angle likewise can for instance be an angle of 0 - 12 degrees, for instance 3 - 9 degrees.

When the saw has been moved the full length of a cutting face and has separated the feed from the cutting face, the saw can be moved in the direction of the cutting face in order to be moved once again the full length of a further cutting face. To this end the apparatus can for instance be provided with wheels or be mounted on a rail guide, such as top rail guide. Alternatively, the feed can be moved in the direction of the saw, for instance by means of a supply container with a conveyor belt on which blocks or bales of feed have been placed.

The separated feed can then be conveyed to a stable or some other feeding place, for instance by means of a driven or self-propelling mixing carriage. If so desired, the apparatus can also be part of a driven or self-propelling forage trailer.

The invention is further elucidated below with reference to the drawings, in which some embodiments are shown by way of illustration.
- Figure 1:: shows an embodiment of an apparatus not according to the invention;
- Figure 2:: shows an embodiment of a potential apparatus according to the invention;
- Figure 3:: shows the apparatus of Figure 2 in side view;
- Figure 4:: is a schematic representation in top view of the position of the saw blade vis-à-vis the cutting face;
- Figure 5:: shows a saw blade for the apparatus of Figure 2;
- Figure 6:: shows the saw blade of Figure 5 in cross-section;
- Figure 7:: shows an embodiment of an apparatus not according to the invention;
- Figure 8:: shows the apparatus of Figure 7 in side view;
- Figure 9:: shows a schematic representation in front view of an alternative embodiment of an apparatus according to the invention;
- Figure 10:: shows the apparatus of Figure 9 in side view;
- Figure 11:: shows a detail of the apparatus of Figure 9.

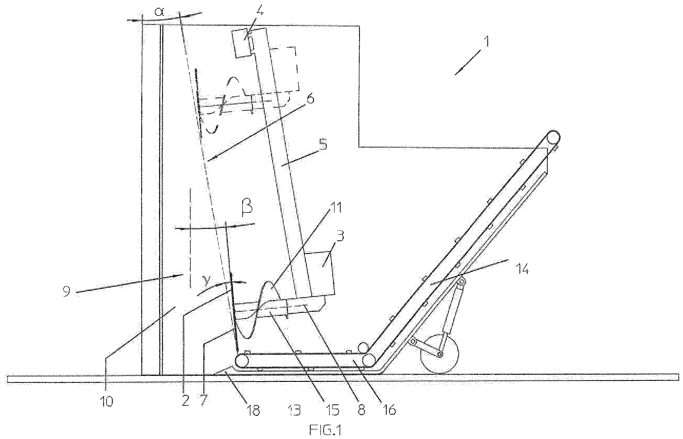

Figure 1 shows an apparatus 1 for separating feed, for instance from bales of silage 10 or loose crop. The apparatus 1 comprises a circular saw 2, which with the aid of a motor 3 can be reciprocated horizontally via a first guide 4 and can be moved via a second guide 5 between a top position (represented in the figure by a dotted line) and a bottom position. The vertical guide 5 runs parallel to a cutting face 6 facing the apparatus 1, which cutting face is rearwardly inclined at an angle α. This angle of inclination α helps to reduce or prevent uncontrolled breaking off of feed.

The saw 2 comprises a circular saw blade 7 rotatable around an axis of rotation 8. The saw blade 7 comprises a sawing edge 9. The saw blade 7 lies at an angle β of about 5 degrees to the cutting face 6, so that only the section around the bottom tip of the sawing edge 9 comes into contact with the cutting face 6. An auger 11 with an auger ribbon of spiral shape 13 extends coaxially from the saw blade 7 in the direction of the vertical guide 5. The auger 11 has a diameter which corresponds to the internal diameter of the saw teeth of the saw blade 7. The sawn-off feed is pushed by the auger 11 in the direction of a feeding conveyor 14 moving in an inclined upward direction. The shaft of the auger 11 is formed by a bushing 15 of large diameter, in order to reduce the risk of silage getting stuck around the bushing 15. The length of the drive shaft corresponds approximately to the radius of the saw blade. The long drive shaft creates space for the feed, which expands after being separated from the block 10.

The feeding conveyor 14 comprises a horizontal front section 16 and a shoveling plate 18, which extends from the horizontal section 16 of the feeding conveyor 14 and which can be slid beneath the block of silage 10.

During the sawing the saw 7 is reciprocated horizontally from one side of the cutting face 6 to the opposite side. After each horizontal stroke the saw 7 is moved downwards over a certain distance. In this way the saw 7 is moved the full length of the cutting face in zigzag fashion.

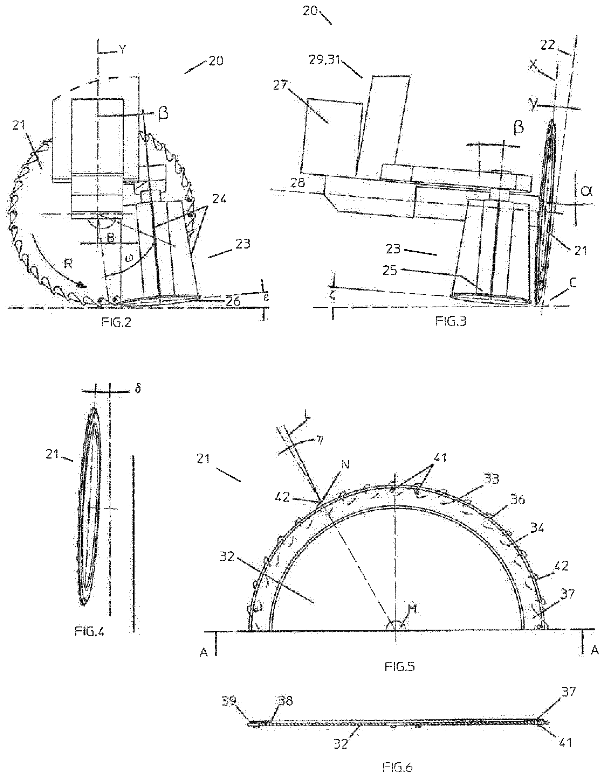

Another potential apparatus 20 is shown in Figures 2 and 3. This cutting unit 20 comprises a circular saw blade 21 with a centre plane X which is moved the full length of a cutting face 22. In this process the saw blade is rotatingly driven, for instance at a speed of 50 - 350 rev./minute. The saw blade can for instance have a diameter of about 700 mm, but larger or smaller radii can also be applied. The cutting face 22 lies at an angle α of for instance about 13 degrees to the vertical. The angle γ between the saw blade 21 and the cutting face 22 is about 5 degrees.

Also in top view the saw blade 21 lies at an angle δ to the cutting face 22 (see Figure 4). This angle δ can for instance be an angle of 0 - 12 degrees, for instance about 3 - 9 degrees.

At the back a tapered feeding-out roller 23 is disposed with a longitudinal axis Y which is essentially parallel to the centre plane X of the saw blade 21 and as a result lies at the same angle β of about 5 degrees to the vertical (see Figure 3). As shown in Figure 3, the feeding-out roller 23 is disposed at a distance B from the centre of the saw blade 21. The distance B corresponds to approximately 0.2 - 0.8 times, for instance 0.3 - 0.6 times, the radius of the saw blade 21. The direction of rotation of the saw is indicated with the arrow R. The feeding-out roller 23 is disposed in the place of the section of the saw blade which in direction of rotation R is behind the point of contact C between the saw blade 21 and the cutting face 22.

The feeding-out roller 23 comprises a central shaft with blades or boards 24, which cast the sawn-off feed in the direction of a discharge conveyor or similar discharge means. The shown embodiment comprises four blades 24 arranged crosswise. The blades 24 can for instance be radial straight boards or move spiral-wise to some extent. In the figure the blades 24 have been configured such that the feeding-out roller 23 tapers in side view. At the bottom the blades 24 have a rounded bottom corner 25. The blades 24 can for instance be made of a type of steel. If so desired, the blades can be produced with sharp side edges.

At the bottom the feeding-out roller 23 is provided with a circular plate 26, for instance with a diameter of 420 mm or larger or smaller if so desired. The round plate 26 protrudes at the periphery in relation to the blades 24. In front view (Figure 2) the circular plate 26 lies at an angle ε to the horizontal base, while in side view (Figure 3) it lies at an angle ζ thereto. In the shown embodiment the circular plate 26 lies at right angles to the longitudinal axis Y, so that the angle ε in side view is essentially equal to the angle in side view between the vertical and the longitudinal axis Y (or between the vertical and the saw blade 21). In the shown embodiment the angle ζ is approximatly equal to the angle ε.

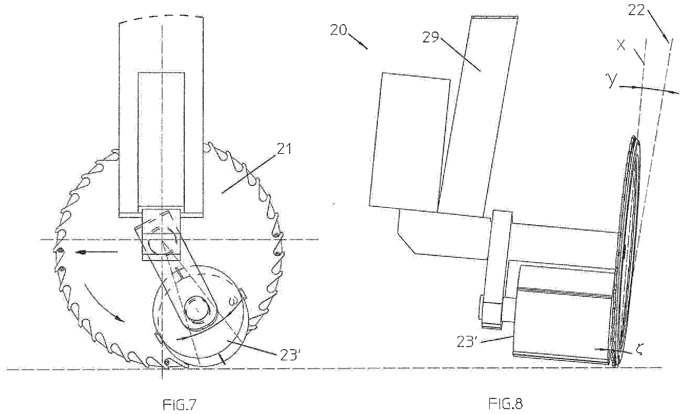

In alternative embodiments the angle ε can be different and the angle can for instance range from -90 to about 6 degrees. In Figures 7 and 8 an embodiment is shown where the longitudinal axis Y of the feeding-out roller 23' is essentially transverse to the circular saw blade 21. The angle ε thus is slightly less than -90 degrees.

A motor 27 drives both the saw 21 and the feeding-out roller 23. When in operation, the saw 21 rotates around an axis of rotation 28 extending in the direction of the cutting face 22.

The apparatus 20 further comprises a guide 29 for moving the circular saw blade 21 the full length of the cutting face 22. The guide 29 is made up of a frame with a first guide along which the saw blade 21 can be moved in horizontal direction, and a second guide 31, along which the saw blade 21 can be moved up and down.

The saw 21 is shown in greater detail in Figures 5 and 6. In the shown embodiment the saw 21 comprises a standard circular saw blade 32 with a sawing edge 33 provided with teeth 34. The usual teeth 34 (represented by a dotted line) with saw teeth 36 are covered by a flat ring 37 with chamfered inner and outer sides 38, 39. The flat ring 37 is connected to the saw blade 21 with bolts 41. The tips of the saw teeth 36 are provided with cutting edges 42, which protrude from beneath the flat ring 37 in a desired - optionally adjustable - length. Because of the teeth's short length the risk of the saw 21 getting stuck is greatly reduced or even eliminated.

The cutting edges 42 are slightly forwardly inclined in the direction of rotation R, as a result of which the angle η between the extension L of the cutting edge 42 and the radial line between the centre M of the saw blade and the furthest vertex N of the saw tooth 36 is a sharp angle, for instance an angle of 0 - 25 degrees.

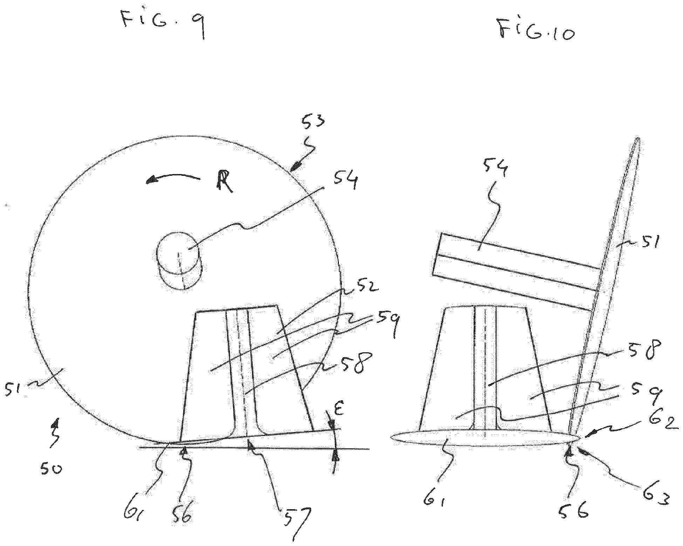

Figures 9 and 10 show another potential apparatus 50 according to the invention. The apparatus 50 comprises a circular saw 51 and a rotatable discharge element 52. The circular saw 51 comprises a saw blade with a sawing edge 53 and can be rotatably driven with the aid of driving means (not shown) by means of a drive shaft 54 in a direction of rotation R. The circular saw 51 can be moved together with the discharge element 52 by means of a guide (not shown) the full length of a cutting face of a block or bale or other feed, with the bottom tip 56 of the sawing edge 53 cutting the full length of the cutting face and forming a cutting point. In front view (Figure 9) the discharge element 52 is disposed in the range 57 of the sawing edge 53, which in direction of rotation R is behind the point of intersection 56.

The discharge element 52 is made up of a central shaft 58 with radial blades or boards 59 and a circular bottom plate 61. The radial boards 59 are narrower at the top than at the bottom. The bottom plate 61 protrudes at the periphery in relation to the boards 59. The bottom plate 61 in front view (Figure 9) lies at an angle ε to the horizontal base. The circular saw 51 is at a clearance angle to a rearwardly inclined cutting face both in side view and in top view (not shown).

As shown in Figure 10, in side view the front end 62 of the bottom plate 61 crosses the bottom end 63 of the circular saw 51 and in side view the ends form an X-shape. In another potential embodiment, the front end 62 of the bottom plate 61 in side view protrudes from beneath the bottom end 63 of the circular saw 51, or the bottom end 63 of the circular saw 51 protrudes in relation to the front end 62 of the bottom plate 61. In both cases the two ends 62, 63 form a T-shape in side view.

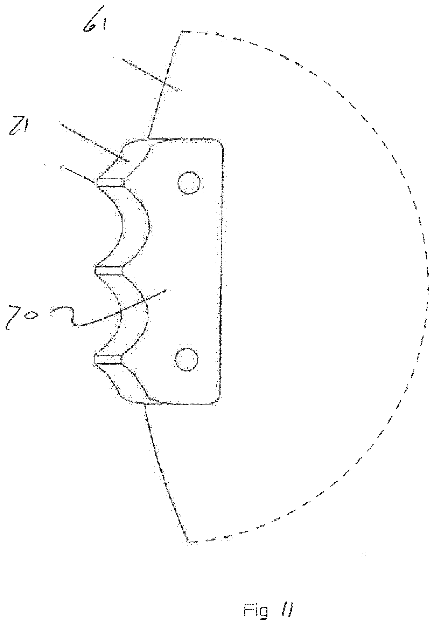

Figure 11 shows in detail a section of the periphery of the bottom plate 61. On the periphery of the bottom plate, knives 70 are spaced out. In the examples as shown the knives take the form of serrated knives of which the cutting edges 71 protrude beyond the periphery of the bottom plate 61.

## Claims

1. Apparatus for separating feed for livestock, comprising:
- a circular saw blade (21) with a sawing edge (33), where the circular saw blade can be rotatably driven with the aid of driving means (27);
- a guide (29) for moving a cutting point of the circular saw blade the full length of a cutting face (22) of the feed;
- a rotatable discharge element (23) for carrying away separated feed in the range of a section of the sawing edge which in direction of rotation is behind the cutting point,
wherein the rotatable discharge element comprises a scraping roller (23), which lies at an angle to a drive shaft of the circular saw, **characterized in that** the scraping roller (23) comprises a longitudinal axis (Y) which in side view lies at an angle ζ of -10 to +10 degrees to the vertical.

2. Apparatus according to claim 1, wherein the discharge element (23) covers the sawing edge (33) over an angular distance ω in the range of 0 < ω < 45 degrees, for instance in the range of 0 < ω < 40 degrees.

3. Apparatus according to claim 1 or 2, wherein the guide (29) is made up of a frame with a first guide along which the saw blade can be moved in horizontal direction, and a second guide along which the saw blade can be moved up and down.

4. Apparatus according to claim 1, wherein the scraping roller (23) has a length which corresponds to 0.3 - 1.2 times the radius of the circular saw blade (21).

5. Apparatus according to any preceding claim, wherein the scraping roller (23) lies at an angle of at most 10 degrees to the vertical, for instance at an angle of 2 - 8 degrees.

6. Apparatus according to any one of claims 1, 4 or 5, wherein the longitudinal axis (Y) of the scraping roller (23) is disposed at a distance from the saw blade of 0.2 - 1.2 times the diameter of the saw blade.

7. Apparatus according to any one of claims 1, 4, 5 or 6, wherein the scraping roller (23) has a central shaft provided with one or more blades (24), which extend for instance radially and/or spiral-wise along the scraping roller.

8. Apparatus according to any one of the preceding claims, wherein the circular saw (21) is provided with cutting teeth, which protrude over a length of 0 < L ≤8 mm.

9. Apparatus according to claim 8, wherein the periphery of the saw blade (21) is circular at least in the vicinity of the cutting teeth.

10. Apparatus according to any one of the preceding claims, wherein the saw blade (21) in top view lies at a sharp angle to the cutting face (22), for instance of 0.5 - 12 degrees.

11. Apparatus according to any one of the preceding claims, wherein the discharge element (23) comprises a drive with variable speed.

12. Apparatus according to any one of the preceding claims, wherein the discharge element (23) has a bottom end which is provided with an end plate (26), which can for instance be provided with cutting elements such as a cutting edge or knives, and wherein in side view one end of the end plate and an end of the saw (21) cross one another in a T-shape or X-shape.

## Patentansprüche

1. Vorrichtung zum Trennen von Futter für Nutztiere, mit:
- einem Kreissägeblatt (21) mit einer Sägeschneidkante (33), wobei das Kreissägeblatt mit Hilfe einer Antriebseinrichtung (27) drehbar antreibbar ist;
- einer Führung (29) zum Bewegen eines Schneidepunkts des Kreissägeblatts über die gesamte Länge einer Schneidfläche (22) des Futters;
- einem drehbaren Abführelement (23) zum Abtransportieren von abgetrenntem Futter in einem Bereich der Sägeschneidkante, der sich in Drehrichtung hinter dem Schneidepunkt befindet.
wobei das drehbare Abführelement eine Abstreifwalze (23) aufweist, die unter einem Winkel zu einer Antriebswelle des Kreissägeblatts angeordnet ist,
**dadurch gekennzeichnet, dass**
die Abstreifwalze (23) eine Längsachse (Y) aufweist, die sich in einer Seitenansicht betrachtet unter einem Winkel ζ von -10 bis +10 Grad zur Vertikalen erstreckt.

2. Vorrichtung nach Anspruch 1, wobei das Abführelement (23) die Sägeschneidkante (33) über einen Winkelabstand ω im Bereich von 0 < ω < 45 Grad, beispielsweise im Bereich von 0 < ω < 40 Grad, abdeckt.

3. Vorrichtung nach Anspruch 1 oder 2, wobei die Führung (29) aus einem Rahmen mit einer ersten Führung, entlang der das Sägeblatt in der horizontalen Richtung bewegt werden kann, und einer zweiten Führung besteht, entlang der das Sägeblatt nach oben und unten bewegt werden kann.

4. Vorrichtung nach Anspruch 1, wobei die Länge der Abstreifwalze (23) dem 0,3- bis 1,2-fachen des Radius des Kreissägeblatts (21) entspricht.

5. Vorrichtung nach einem der vorangehenden Ansprüche, wobei die Abstreifwalze (23) unter einem Winkel von höchstens 10 Grad, beispielsweise unter einem Winkel von 2 bis 8 Grad, zur Vertikalen angeordnet ist.

6. Vorrichtung nach einem der Ansprüche 1, 4 oder 5, wobei die Längsachse (Y) der Abstreifwalze (23) in einem Abstand vom Sägeblatt angeordnet ist, der dem 0,2- bis 1,2-fachen des Durchmessers des Sägeblatts entspricht.

7. Vorrichtung nach einem der Ansprüche 1, 4, 5 oder 6, wobei die Abstreifwalze (23) eine mittige Welle mit einer oder mehreren Klingen (24) aufweist, die sich beispielsweise radial und/oder spiralförmig entlang der Abstreifwalze erstrecken.

8. Vorrichtung nach einem der vorangehenden Ansprüche, wobei das Kreissägeblatt (21) Schneidzähne aufweist, die in einer Länge von 0 < L ≤ 8 mm hervorstehen.

9. Vorrichtung nach Anspruch 8, wobei der Umfang des Sägeblattes (21) mindestens in der Nähe der Schneidzähne kreisförmig ist.

10. Vorrichtung nach einem der vorangehenden Ansprüche, wobei das Sägeblatt (21) in Draufsicht betrachtet unter einem spitzen Winkel von beispielsweise 0,5 bis 12 Grad zur Schneidfläche (22) angeordnet ist.

11. Vorrichtung nach einem der vorangehenden Ansprüche, wobei das Abführelement (23) einen Antrieb mit variabler Geschwindigkeit aufweist.

12. Vorrichtung nach einem der vorangehenden Ansprüche, wobei das Abführelement (23) ein unteres Ende aufweist, an dem eine Endplatte (26) vorgesehen ist, die beispielsweise Schneidelemente aufweisen kann, wie beispielsweise eine Schneidkante oder Klingen, und wobei in einer Seitenansicht betrachtet ein Ende der Endplatte und ein Ende des Sägeblatts (21) sich T- oder X-förmig kreuzen.

## Revendications

1. Appareil de séparation d'aliment pour bétail, comprenant :
- une lame de scie circulaire (21) avec une arête de sciage (33), où la lame de scie circulaire peut être entraînée en rotation à l'aide d'un moyen d'entraînement (27) ;
- un guide (29) pour déplacer un point de coupe de la lame de scie circulaire sur la longueur entière d'une face de coupe (22) de l'aliment ;
- un élément d'évacuation rotatif (23) pour emporter l'aliment séparé dans la plage d'une section de l'arête de sciage qui, dans une direction de rotation, est derrière le point de coupe,
dans lequel l'élément d'évacuation rotatif comprend un rouleau racleur (23), qui se trouve à un angle par rapport à un arbre d'entraînement de la scie circulaire, **caractérisé en ce que** le rouleau racleur (23) comprend un axe longitudinal (Y) qui dans une vue de profil se trouve à un angle ζ de -10 à +10 degrés par rapport à la verticale.

2. Appareil selon la revendication 1, dans lequel l'élément d'évacuation (23) couvre l'arête de sciage (33) sur une distance angulaire ω dans la plage de 0 < ω < 45 degrés, par exemple dans la plage de 0 < ω < 40 degrés.

3. Appareil selon la revendication 1 ou 2, dans lequel le guide (29) est constitué d'un châssis doté d'un premier guide le long duquel la lame de scie peut se déplacer en direction horizontale, et d'un second guide le long duquel la lame de scie peut monter et descendre.

4. Appareil selon la revendication 1, dans lequel le rouleau racleur (23) a une longueur qui correspond à 0,3 à 1,2 fois le rayon de la lame de scie circulaire (21).

5. Appareil selon l'une quelconque des revendications précédentes, dans lequel le rouleau racleur (23) se trouve à un angle d'au plus 10 degrés par rapport à la verticale, par exemple à un angle de 2 à 8 degrés.

6. Appareil selon l'une quelconque des revendications 1, 4 ou 5, dans lequel l'axe longitudinal (Y) du rouleau racleur (23) est disposé à une distance de la lame de scie de 0,2 à 1,2 fois le diamètre de la lame de scie.

7. Appareil selon l'une quelconque des revendications 1, 4, 5 ou 6, dans lequel le rouleau racleur (23) a un arbre central pourvu d'une ou de plusieurs lames (24), qui s'étendent par exemple radialement et/ou en spiral le long du rouleau racleur.

8. Appareil selon l'une quelconque des revendications précédentes, dans lequel la scie circulaire (21) est pourvue de dents de coupe, qui dépassent sur une longueur de 0 < L ≤ 8 mm.

9. Appareil selon la revendication 8, dans lequel la périphérie de la lame de scie (21) est circulaire au moins à proximité des dents de coupe.

10. Appareil selon l'une quelconque des revendications précédentes, dans lequel la lame de scie (21) dans une vue de dessus se trouve à un angle aigu par rapport à la face de coupe (22), par exemple de 0,5 à 12 degrés.

11. Appareil selon l'une quelconque des revendications précédentes, dans lequel l'élément d'évacuation (23) comprend un élément d'entraînement à vitesse variable.

12. Appareil selon l'une quelconque des revendications précédentes, dans lequel l'élément d'évacuation (23) a une extrémité basse qui est pourvue d'une plaque d'extrémité (26), qui peut par exemple être pourvue d'éléments de coupe tels qu'une arête de coupe ou de couteaux, et dans lequel dans une vue de profil une extrémité de la plaque d'extrémité et une extrémité de la scie (21) se croisent l'une l'autre en une forme de T ou une forme de X.
